# EUROPEAN PATENT SPECIFICATION

(11) **EP 3 868 849 B1**
(45) Date of publication and mention of the grant of the patent: **07.08.2024**
(21) Application number: 19873649.8
(22) Date of filing: 11.10.2019
(51) Int. Cl.: C09K 5/16, C01B 3/00

(54) **USE OF MATERIAL AS HEAT-GENERATING MATERIAL, AND HEAT-GENERATING SYSTEM AND HEAT SUPPLY METHOD IN WHICH THE HEAT-GENERATING MATERIAL IS USED**
VERWENDUNG EINES MATERIALS ALS WÄRMEERZEUGUNGSMATERIAL UND WÄRMEERZEUGUNGSSYSTEM SOWIE WÄRMEZUFUHRVERFAHREN, IN WELCHEN DIESES WÄRMEERZEUGUNGSMATERIAL VERWENDET WIRD
UTILISATION D'UN MATÉRIAU COMME MATÉRIAU DE GÉNÉRATION DE CHALEUR, ET SYSTÈME DE GÉNÉRATION DE CHALEUR ET PROCÉDÉ D'ALIMENTATION EN CHALEUR DANS LEQUEL CELUI-CI EST UTILISÉ

(30) Priority: 15.10.2018 JP 2018194469
(43) Date of publication of application: 25.08.2021
(73) Proprietor: NISSAN MOTOR CO., LTD., Yokohama-shi, Kanagawa 221-0023 (JP); Renault s.a.s, 92100 Boulogne Billancourt (FR); Kyushu University, National University Corporation, Nishi-ku Fukuoka-shi Fukuoka 819-0395 (JP)
(72) Inventor: UCHIMURA, Masanobu, Atsugi-shi, Kanagawa 243-0123 (JP); NAKAMURA, Masanori, Atsugi-shi, Kanagawa 243-0123 (JP); KISHIDA, Masahiro, Fukuoka-shi, Fukuoka 819-0395 (JP); YAMAMOTO, Tsuyoshi, Fukuoka-shi, Fukuoka 819-0395 (JP); MATSUNE, Hideki, Fukuoka-shi, Fukuoka 819-0395 (JP); IMOTO, Itsuki, Fukuoka-shi, Fukuoka 819-0395 (JP); SATOH, Yuya, Fukuoka-shi, Fukuoka 819-0395 (JP)
(74) Representative: Grünecker Patent- und Rechtsanwälte PartG mbB
(86) International application number: PCT/JP2019/040269
(87) International publication number: WO 2020/080303

(56) References cited:
- JP-A- 2000 097 514
- JP-A- 2000 111 193
- JP-A- 2001 272 131
- JP-A- H05 163 001
- JP-A- S5 712 294
- JP-A- S57 179 549
- No further relevant documents disclosed

## Description

### TECHNICAL FIELD

The present invention relates to the use of a heat generating material, a heat generating system using the heat generating material, and a method of supplying heat.

### BACKGROUND ART

Conventionally, a heat utilizing system using a hydrogen absorption material that absorbs hydrogen at a high temperature (100°C or more) has been known.

For example, in Claudio Corgnale et al., Renewable and Sustainable Energy Reviews, 38 (2014) 821-833, systems for concentrating solar power plants including two types of hydrogen absorption materials is proposed. In this system, during the day when sunlight is available, water vapor is generated using solar heat and electricity is generated by a turbine. At the same time, a first hydrogen absorption material (for high temperature) is heated using a part of solar heat, hydrogen is released from the first hydrogen absorption material, and this hydrogen is absorbed to a second (for low temperature) hydrogen absorption material, and the absorption heat at that time is stored. On the other hand, at night when sunlight is not available, the heat stored during the day is used to heat the second hydrogen absorption material, thereby releasing hydrogen from the second hydrogen absorption material. This hydrogen is absorbed to the first hydrogen absorption material, and the absorption heat at that time is used to generate water vapor. Thus, it is possible to constantly generate water vapor not only during the day but also at night, and to generate electricity by the turbine. Further examples of hydrogen absorption materials are disclosed in JP 2000-097514 A, JP 2000-11193 A, JP H05 163001 A, JP S57 179549 A, JP 2001-272 131 A, and JP S57 12294 A

### SUMMARY OF INVENTION

### Technical Problem

In the technique described in Claudio Corgnale et al., Renewable and Sustainable Energy Reviews, 38 (2014) 821-833, it is possible to use solar heat efficiently by using the hydrogen absorption material as described above. However, in order to increase the amount of heat generation at night when sunlight is not available, it is necessary to develop a material having a higher hydrogen absorption performance and a larger amount of heat generation. Further, in the conventional hydrogen absorption material for high temperature, when the hydrogen is released, the particles of the hydrogen absorption material are aggregated. This causes a problem that the hydrogen absorption performance and the amount of heat generation are reduced.

Therefore, an object of the present invention is to provide a heat generating material in which a decrease in hydrogen absorption performance and amount of heat generation can be suppressed at the time of use at a high temperature, and physical properties such as hydrogen absorption performance and amount of heat generation are further improved.

### Solution to Problem

The inventors of the present invention have carried out a diligent study to solve the problems described above. As a result, they have found that the above problems can be solved by combining two types of metals satisfying a predetermined condition and using the hydrogen absorption capacity of at least one of the metals to form a heat generating material, and completed the present invention.

That is, according to one aspect of the present invention, there is provided the use of a material as a heat generating material, the material including: a first metal having a melting point of 230°C or more; and a second metal having a melting point higher than the melting point of the first metal. Here, in the heat generating material, at least one of the first metal and the second metal has a hydrogen solubility greater than silver at a temperature less than the melting point of the second metal. Further, a hydride of at least one of the first metal and the second metal has a standard enthalpy of formation equal to or more than a standard enthalpy of formation of CaH₂. In the heat generating material, heat is generated when the first metal and the second metal come into contact with hydrogen gas at a temperature less than the melting point of the second metal.

### BRIEF DESCRIPTION OF DRAWINGS

Fig. 1 is a cross-sectional view schematically illustrating a heat generating material according to one embodiment of the present invention.
Fig. 2 are micrographs (magnification: 500 times) showing results of analyzing microstructures of alloys contained in heat generating materials according to one embodiment of the present invention (heat generating materials manufactured in Examples 1 and 2) using an elemental analyzer attached to a scanning electron microscope, i.e., SEM-EDX.
Fig. 3 is a cross-sectional view schematically illustrating a heat generating material according to another embodiment of the present invention.

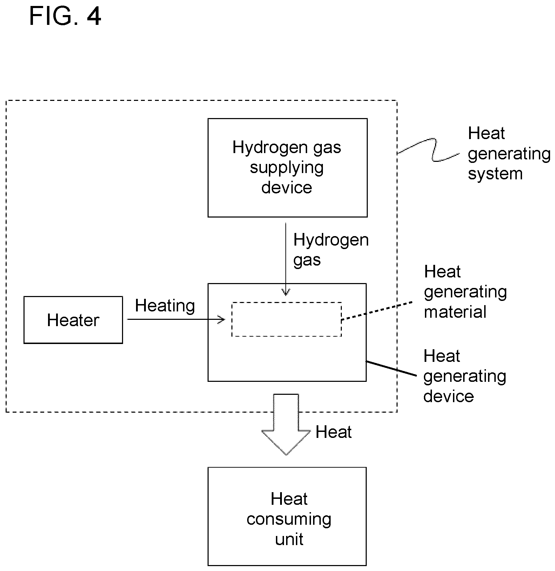

Fig. 4 is a block diagram illustrating an outline of a heat generating system according to one embodiment of the present invention.
Fig. 5A is a graph showing the results of performing differential scanning calorimetry (DSC) (holding temperature: 700°C) on a heat generating material (1) manufactured in Examples 1 and 2 under the conditions of hydrogen gas (H₂) flow or helium gas (He) flow.
Fig. 5B is a graph showing the results of performing differential scanning calorimetry (DSC) (holding temperature: 800°C) on the heat generating material (1) manufactured in Examples 1 and 2 under the conditions of hydrogen gas (H₂) flow or helium gas (He) flow.
Fig. 6 is a graph showing the results of investigating change in hydrogen concentration (i.e., the profile of hydrogen absorption and desorption reactions) regarding the heat generating materials (1) manufactured in Examples 1 and 2 at the time of temperature rise by hydrogen TPR (temperature-programmed reduction) method.
Fig. 7 is a graph showing the results of performing differential scanning calorimetry (DSC) on nickel (Ni) powder under the conditions of hydrogen gas (H₂) flow or helium gas (He) flow in Comparative Example 1.
Fig. 8 is a graph showing the results of performing differential scanning calorimetry (DSC) on aluminum (Al) powder under the conditions of hydrogen gas (H₂) flow or helium gas (He) flow in Comparative Example 2.

### DESCRIPTION OF EMBODIMENTS

Hereinafter, exemplary embodiments of the present invention described above will be described with reference to the drawings, but the technical scope of the present invention should be determined based on the description of the claims, and is not limited to the following embodiments. The dimensional ratios of the drawings are exaggerated for convenience of description and may differ from the actual ratios.

One aspect of the present invention is the use of a material as a heat generating material, wherein the material includes: a first metal having a melting point of 230°C or more; and a second metal having a melting point higher than the melting point of the first metal, in which, at this time, at least one of the first metal or the second metal has a hydrogen solubility greater than silver at a temperature less than the melting point of the second metal, a hydride of at least one of the first metal or the second metal has a standard enthalpy of formation equal to or more than a standard enthalpy of formation of CaH₂, and heat is generated when the first metal and the second metal come into contact with hydrogen gas at a temperature less than the melting point of the second metal. The heat generating material according to this aspect is heated in the presence of hydrogen gas (H₂), thereby releasing a very large amount of heat generation to the outside. As described above, according to the present invention, it is possible to provide a heat generating material in which a decrease in hydrogen absorption performance and amount of heat generation can be suppressed at the time of use at a high temperature, and physical properties such as hydrogen absorption performance and amount of heat generation are further improved. This heat generating material is suitably applied to a heat generating system and a method of supplying heat.

The mechanism by which the heat generating material can generate a very large amount of heat (excess heat) has not been completely clarified. However, concerning the above mechanism, the inventors of the present invention presume that a large amount of heat is generated as described above as a result of repeated absorption and desorption of hydrogen due to repeated phase transitions of the hydride alloy.

### [Heat Generating Material]

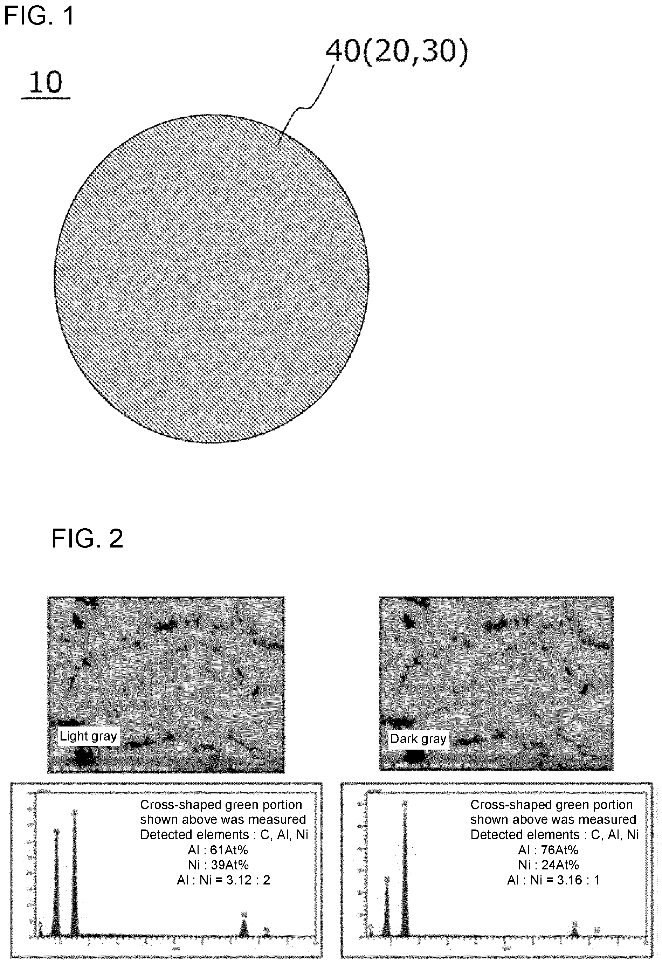

Fig. 1 is a cross-sectional view schematically illustrating a heat generating material as used in one embodiment of the present invention. The heat generating material 10 illustrated in Fig. 1 contains an alloy 40 of aluminum (Al) (melting point: 660.3°C) 20 as a first metal and nickel (Ni) (melting point: 1455°C) 30 as a second metal. In this exemplary embodiment, the alloy 40 of the aluminum (Al) 20 and the nickel (Ni) 30 has a plurality of phases with different composition ratios. Fig. 2 shows micrographs (magnification: 500 times) showing results of analyzing microstructures of alloys contained in heat generating materials used according to this exemplary embodiment of the present invention (heat generating materials manufactured in Examples 1 and 2) using an elemental analyzer attached to a scanning electron microscope, i.e., SEM-EDX. As illustrated in Fig. 2, the alloy according to this exemplary embodiment has a plurality of phases with different composition ratios. Specifically, in the micrographs shown in Fig. 2, it can be seen that there are two phases: a phase showing light gray and a phase showing dark gray. Here, the graph illustrated on the left of Fig. 2 shows the results of analyzing the elemental composition of the light gray phase in the micrograph shown in Fig. 2. From this result, it can be seen that the light gray phase has a composition of Al : Ni = 61 atomict : 39 atomict (Al : Ni = 3.12 : 2 (atomic ratio)). On the other hand, the graph illustrated on the right of Fig. 2 shows the results of analyzing the elemental composition of the dark gray phase in the micrograph shown in Fig. 2. From this result, it can be seen that the dark gray phase has a composition of Al : Ni = 76 atomict : 24 atomict (Al : Ni = 3.16 : 1 (atomic ratio)).

Hereinbelow, a specific configuration of the heat generating material according to this aspect will be described in detail.

### (Metal Type)

The heat generating material according to this aspect contains at least two types of metals. Among the metals contained in the heat generating material according to this aspect, the metal having a lower melting point is referred to as a "first metal", and the metal having a higher melting point is referred to as a "second metal".

Note that, it is essential that the melting point of the first metal is 230°C or more. Further, at least one of the first metal and the second metal contained in the heat generating material according to this aspect has a hydrogen solubility greater than silver at a temperature less than the melting point of the second metal. With such a configuration, hydrogen is sufficiently absorbed for repeated phase transitions of the hydride alloy that occur when the heat generating material according to this aspect generates a large amount of heat. On the other hand, when the hydrogen solubility of both the first metal and the second metal is less than the hydrogen solubility of silver, the material cannot absorb a sufficient amount of hydrogen and cannot be used as a heat generating material. In a preferred exemplary embodiment, both the first metal and the second metal have a hydrogen solubility greater than silver at the above temperature. The hydrogen solubility value for a metal may be a value obtained experimentally or a value obtained by calculation using computer simulation.

Further, a hydride of at least one of the first metal and the second metal has a standard enthalpy of formation equal to or more than a standard enthalpy of formation of CaH₂ (-186.2 kJ/mol). With such a configuration, hydrogen is sufficiently desorbed for repeated phase transitions of the hydride alloy that occur when the heat generating material according to this aspect generates a large amount of heat. On the other hand, when the standard enthalpy of formation of a hydride of each of the first metal and the second metal is larger than the standard enthalpy of formation of CaH₂, the hydride formed by absorbing hydrogen is extremely stable in terms of energy. As a result, the hydrogen is not fully desorbed from the hydride and cannot be used as the heat generating material. Note that the value of standard enthalpy of formation of a hydride of a metal may also be a value obtained experimentally or a value obtained by calculation using computer simulation.

When at least a metal that satisfies the requirements of the "first metal" and the "second metal" is included, the metal is included in the technical scope of the heat generating material according to this aspect. That is, even when three or more metals are contained, in the case where any two of the metals satisfy the above requirements, it is within the scope of the use according to present invention.

Further, there is no particular limitation on the form of containing these metals. However, as in the above-described exemplary embodiment, it is preferable that the first metal and the second metal are present as an alloy having a plurality of phases with different composition ratios.

There is no particular limitation on specific types of the first metal and the second metal, and any combination can be arbitrarily selected from the combinations satisfying the above requirements. Then, whether a metal corresponds to the "first metal" or the "second metal" is a relative one determined by the relationship with other metals to be combined. Therefore, depending on the combination of these metals, there is a possibility that a metal corresponds to the "first metal" and there is a possibility that the metal corresponds to the "second metal". As an example, examples of the first metal include aluminum (Al), tin (Sn), and lead (Pb). Examples of the second metal include nickel (Ni), titanium (Ti), zirconium (Zr), manganese (Mn), zinc (Zn), vanadium (V), and calcium (Ca). It is preferable to use these metals because it is possible to form a heat generating material having a large amount of heat generation. Further, tin (Sn) having a relatively low melting point is preferably used as the first metal from the viewpoint that tin can function as a heat generating material even when the heating temperature is relatively low. Further, from the viewpoint of a large amount of heat generation, it is also preferable to use aluminum (Al) as the first metal. Furthermore, examples of the combination of "first metal-second metal" include nickel-zirconium, aluminum-nickel, aluminum-titanium, aluminum-manganese, aluminum-zinc, tin-titanium, aluminum-calcium, and the like. From the viewpoint that it is possible to form a heat generating material having a particularly large amount of heat generation, the combinations of aluminum-nickel, aluminum-titanium, and tin-titanium are preferable, and the combinations of aluminum-nickel and tin-titanium are more preferable, and the combination of aluminum-nickel is particularly preferable. Note that it goes without saying that metals other than these metals and combinations other than these combinations may be used.

### (Outer Shell)

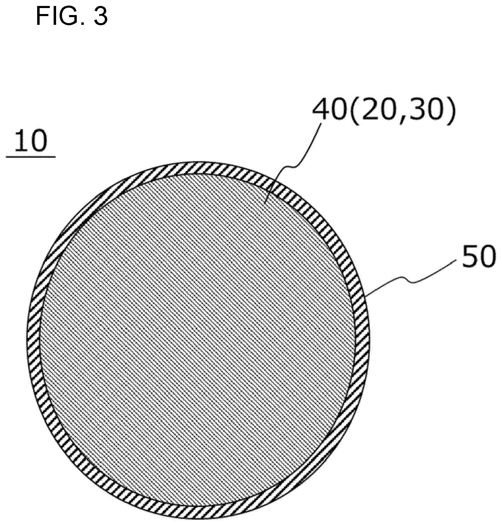

The heat generating material according to this aspect may be located inside an outer shell made of an inorganic porous body, as described later in Example 8 (heat generating material (7)) and illustrated in Fig. 3. In the exemplary embodiment illustrated in Fig.3, the metal (the aluminum (Al) 20 and the nickel (Ni) 30) in the state of the alloy 40 is located inside an outer shell 50 made of a metallic oxide (silica (SiO₂)) that is an inorganic porous body.

Here, the heat generating material according to this aspect is used after being heated to a temperature less than the melting point of the second metal. Therefore, the constituent material of the outer shell is not limited to silica, and may be a porous body that is chemically stable at the above temperature under hydrogen gas (H₂) atmosphere and that is permeable to hydrogen gas (H₂). As the constituent material of the outer shell, metallic oxides such as silica, alumina, ceria, zirconia, titania, and zeolite are preferable from the viewpoint of easy availability and production. Among them, silica or zirconia is particularly preferable. Further, a porous carbon material such as activated carbon, porous silicon carbide/silicon nitride, a porous metal, a porous metal complex (MOF), and the like can also be used as the inorganic porous body forming the outer shell.

As illustrated in Fig.3, since the first metal and the second metal are located inside an outer shell made of an inorganic porous body, there is an advantage that the heat generating material can be easily handled. Further, it is preferable that the first metal melts at the operating temperature of the heat generating material (temperature less than the melting point of the second metal) (however, it is sometimes possible to cause the exothermic reaction to proceed even when the first metal is not melted). Here, when the first metal melts at the operating temperature of the heat generating material, the presence of the outer shell prevents the melted first metal from flowing and becoming unable to maintain the shape of the heat generating material. When the shape of the heat generating material is maintained as described above, there is also an advantage that the heat generating material can be easily handled even when it is reused.

Note that the presence of the outer shell is not essential. That is, as illustrated in Fig.1, the heat generating material 10 may be composed of a mixture of a first metal (for example, aluminum (Al)) and a second metal (for example, nickel (Ni)), a solid solution or an alloy.

### [Method of Manufacturing Heat Generating Material]

There is no particular limitation on the method of manufacturing the heat generating material according to this aspect, and the heat generating material according to this aspect can be manufactured by referring to conventionally known technical common knowledge based on the description in the section of Examples given later.

As an example, in order to manufacture the heat generating material of the exemplary embodiment illustrated in Fig.3, the method described in the section of Examples below can be adopted. This manufacturing method will be briefly described below by taking the case where the outer shell is made of silica (SiO₂) as an example.

In this manufacturing method, first, a powder of a first metal (for example, aluminum (Al)) is prepared. Water or a hydrophilic solvent containing water is added to this powder as a solvent. As the hydrophilic solvent, alcohol having 1 to 4 carbon atoms, formic acid, nitromethane, acetic acid, acetone, tetrahydrofuran, ethyl acetate, acetonitrile, dimethylformamide, dimethyl sulfoxide, propylene carbonate, N-methylpyrrolidone, or the like can be used, and there is no limitation on the content rate of water.

Then, a base is added as a catalyst for the silicidation (hydrolysis/condensation) reaction described below. The type of this base is not particularly limited, and examples of the base include organic base catalysts such as trimethylamine, triethylamine, tripropylamine, tributylamine, imidazole, N,N-dimethylaniline, N,N-diethylaniline, pyridine, quinoline, isoquinoline, α-picoline, β-picoline, 2,4-lutidine, and 2,6-lutidine; and inorganic base catalysts such as potassium hydroxide, sodium hydroxide, potassium carbonate, sodium carbonate, potassium hydrogen carbonate, and sodium hydrogen carbonate.

Then, if necessary, the solution is uniformly mixed by a stirring process, and then a coupling agent having an adsorbing ability to any metal is added, and the coupling agent is used as a starting point for forming the silica outer shell. The coupling agent is preferably an alkoxide or a compound having an amino group such as aminopropyl group. For example, aminopropyltrimethoxysilane, aminopropyltriethoxysilane (APTES), aminopropyltripropoxidesilane, aminopropyldimethoxymethylsilane, mercaptotrimethylsilane, mercaptotriethylsilane, mercaptodimethoxymethylsilane, and the like are suitable. In addition to the alkoxide having an amino group, diamines such as pentamethylenediamine, hexamethylenediamine, and heptamethylenediamine can be used. Note that the solution may be heated, if necessary, and may be further subjected to a stirring process. The coupling agent can be adsorbed onto the surface of the metal particles or can be coated with the coupling agent by the procedure. The formation of such an adsorption layer or coating layer has a technical effect of increasing the uniformity of the silica outer shell.

Then, in order to form a silica outer shell, a precursor of the silica outer shell is added to cause a shell-forming reaction. As the precursor of the silica outer shell, an alkoxide such as silicon tetramethoxide, silicon tetraethoxide (TEOS) or silicon tetrapropoxide, or an alkoxide in which the alkoxy group is partially changed to another functional group can also be used. Examples of other functional groups include a methyl group, an ethyl group, a propyl group, an aminopropyl group, a mercapto group, and the like. Further, sodium silicate (liquid glass) can also be used as the silica precursor. However, in that case, it is necessary to control the pH in the range of 12 to 14 to reduce the reactivity of the liquid glass. At this point, since some alkoxides such as TEOS are not dissolved in water, the solution is in a state of being separated into two layers (the lower layer is an aqueous liquid phase and the upper layer is a silica precursor phase). Note that such phase separation does not occur when a hydrophilic solvent is used as the solvent instead of water or when a hydrophilic alkoxide is used.

As a precursor for forming an outer shell made of alumina, zirconia, titania, magnesia, or the like, other than silica, the same alkoxide as that for silica can be used. For example, aluminum propoxide, aluminum isopropoxide, aluminum butoxide, zirconium isopropoxide, zirconium butoxide, titanium isopropoxide, titanium butoxide, magnesium ethoxide, magnesium methoxide, and the like can be used. Further, salts of magnesium chloride, magnesium nitrate, magnesium sulfate, and the like can also be used as a precursor of magnesia. Further, chlorides, nitrates, and sulfates of metals, inorganic acids and ammonium salts of the inorganic acids, or the like can be used as precursors of yttrium oxide, tungsten oxide, cerium oxide, and lanthanum oxide. Examples thereof include yttrium chloride, yttrium nitrate, yttrium sulfate, tungstic acid, ammonium tungstate, sodium tungstate, cerium chloride, cerium nitrate, cerium sulfate, lanthanum chloride, lanthanum nitrate, lanthanum sulfate, and the like.

After the addition of the silica precursor, the solution is preferably stirred while being heated. As a result, the silica precursor slightly dissolved in the aqueous liquid phase causes a silica formation reaction (hydrolysis/condensation reaction) in the presence of the base catalyst. As this reaction proceeds, the silica precursor present in the aqueous liquid phase is consumed, so the silica precursor is continuously supplied from the silica precursor phase to the aqueous liquid phase, and the silicidation (hydrolysis/condensation) reaction proceeds until the whole silica precursor is consumed.

After the silica outer shell is formed, a centrifugation process is performed for the purpose of separating the silica-coated particles of the first metal from the solution. Thereafter, the particles may be washed once or plural times with a solvent such as 2-propanol for the purpose of removing the base catalyst and the unreacted silane compound attached to the separated silica-coated metal particles. After that, it is preferable to vacuum drying the particles, for example, overnight, and then to fire the particles in air at a temperature of 100 to 500°C for 0.5 hour to 12 hours. As a result, it is possible to remove the solvent remaining on the silica-coated metal particles and allow the silicidation reaction to proceed completely. In this manner, composite particles are obtained in which the surface of the particles of the first metal is covered with silica, i.e., an inorganic porous body (metallic oxide).

Then, to the composite particles (silica-coated metal particles) obtained above, an aqueous solution containing a salt of the metal (for example, nitrate, hydrochloride, or the like) as a raw material of the second metal is added with additional water, if necessary. Then, this solution is subjected to an impregnation process for about several hours to several tens of hours while being heated to 70 to 100°C in order to allow the ions of the second metal to penetrate into the pores of silica. After that, for example, vacuum drying is performed overnight, and firing is performed in hydrogen at 300 to 500°C for 0.5 hour to 4 hours. Air or an inert gas may be used as an atmosphere gas at the time of firing. In that case, after firing, it is necessary to reduce again with hydrogen at the same temperature and time as those when firing. As a result, the precursor of the second metal is reduced to the metal, and the heat generating material of the exemplary embodiment illustrated in Fig.3 can be manufactured.

Next, a method of manufacturing a heat generating material without using the outer shell will be briefly described below. In this manufacturing method, first, a first metal (for example, aluminum (Al)) powder and a second metal (for example, nickel (Ni)) powder are prepared. The shape of the metal does not necessarily have to be a powder, but the powder shape is desirable for uniform mixing. Two kinds of powders are weighed at a desired ratio, added to a mortar or the like, and mixed with a pestle or the like. The mortar, pestle, and the like may be made of any material such as agate or alumina.

Subsequently, the composite particles obtained above are alloyed by a heating process.

The composite particles are not necessarily alloyed in advance, and may be alloyed during temperature increase for heating the heat generating material. The alloying method is not limited to the heating process, and may be chemical alloy coating or mechanical alloying in which the composite particles are mechanically mixed using a ball mill device.

When the particle size of the alloy increases after alloying, the particle size may be reduced by crushing or the like.

### [Application of Heat Generating Material (Heat Generating System)]

The heat generating material according to the above-described embodiment can be used as a heat generating system applicable to various applications of heat. That is, according to another aspect of the present invention, there is provided a heat generating system including: a heat generating device in which the heat generating material according to the above-described aspect is arranged; a heater configured to heat the heat generating material to a temperature that is equal to or more than a melting point of the first metal and is less than a melting point of the second metal; and a hydrogen gas supplying device that supplies hydrogen gas to the heat generating material. Further, there is provided a method of supplying heat including: heating the heat generating material according to the above-described aspect in the presence of hydrogen gas to a temperature that is equal to or more than a melting point of the first metal and is less than a melting point of the second metal; and causing the heat generating material to generate heat.

Fig.3 is a block diagram illustrating an outline of the heat generating system according to this aspect. As illustrated in Fig. 3, when the heat generating system is used (when heat is supplied), the hydrogen gas supplying device supplies hydrogen gas to the heat generating material arranged in the heat generating device. Further, the heater heats the heat generating material arranged in the heat generating device. The heating temperature at this time is less than the melting point of the second metal, and is equal to or more than the melting point of the first metal. As an example, when the "first metal-second metal" combination is aluminum-nickel, the heating temperature is less than 1455°C and higher than 660.3°C. Further, when the combination is tin-titanium, the heating temperature is less than 1668°C and higher than 231.9°C.

When the heat generating system is used (when heat is supplied), the heat generating material arranged in the heat generating device is heated to the above heating temperature in the presence of hydrogen gas (H₂), so that a very large amount of heat generation is released to the outside. The large amount of heat thus released from the heat generating material is supplied to a heat consuming unit located outside the heat generating system.

The mechanism by which the heat generating material according to the use of the present invention can generate a very large amount of heat (excess heat) has not been completely clarified. However, in the section of Examples described below, from the results of investigating the profile of the hydrogen absorption reaction by the heat generating material (1) at the time of temperature rise by hydrogen TPR (temperature-programmed reduction) method, it is suggested that the large heat generation observed when the heat generating material (1) is heated to a temperature higher than the melting point of aluminum (Al) is different from the heat of hydrogen absorption during the hydrogen absorption reaction. A large amount of heat generation by the heat generating material according to the use of the present invention occurs only in the presence of hydrogen gas (H₂). Accordingly, the inventors of the present invention presume that, as for the mechanism of heat generation, a large amount of heat is generated as described above as a result of repeated absorption and desorption of hydrogen due to repeated phase transitions of the hydride alloy.

Here, the heat generating device in which the heat generating material is arranged can have any configuration, and can be, for example, a container that holds the heat generating material (particularly, a particulate heat generating material).

Further, the heat generating device has a honeycomb structure such as a ceramic honeycomb or a metal honeycomb in order to increase the contact area between the heat generating material and hydrogen gas (H₂), and can hold the heat generating material on the flow path surface of the honeycomb cell.

In order to supply the heat generated by the heat generating device to the heat consuming unit, the heat generating device and the heat consuming unit can be thermally coupled. In this case, it is possible to supply heat from the heat generating device to the heat consuming unit by heat transfer, to supply heat from the heat generating device to the heat consuming unit via the warmed gas, and to supply heat from the heat generating device to the heat consuming unit using a heat medium, and the like. In the case of using a heat medium that is a fluid, the heat generating device can have a shape that is commonly employed as a heat exchanger. That is, the heat generating device can have a flow path in which the heat generating material is arranged and through which hydrogen gas (H₂) flows, and a flow path through which the heat medium flows. Note that an object to be heated itself such as cooling water may be used as the heat medium.

The hydrogen gas supplying device may be provided with any device for supplying hydrogen gas, for example, a tank holding hydrogen gas, a pump, a piping, and the like for obtaining hydrogen gas (H₂) from the outside and supplying the gas to the heat generating material. The hydrogen gas (H₂) is a gas that is absorbed to the heat generating material arranged in the heat generating device when the heat generating material is heated and causes an exothermic reaction. The hydrogen gas (H₂) may be held in the tank in the state of hydrogen gas, or may be a gas generated at any time by reforming methanol or biomass, for example.

### Examples

Hereinbelow, the present invention will be described in more detail with reference to Examples. However, the technical scope of the present invention is not limited to the following Examples.

### [Example 1 and Example 2]

The heat generating material (1) was prepared by the following method, and differential scanning calorimetry (DSC) was conducted.

### (Preparation of Heat Generating Material (1))

First, aluminum (Al) (melting point: 660.3°C) powder (purity 99.5%) was prepared as the first metal. Further, nickel (Ni) (melting point: 1455°C) powder was prepared as the second metal. 20 mg of the aluminum (Al) powder and 20 mg of the nickel (Ni) powder were weighed and mixed for 1 to 2 minutes using a mortar and a pestle to prepare a heat generating material (1) in the form of a mixture of metal powders.

### (Differential Scanning Calorimetry (DSC) of Heat Generating Material (1))

Differential scanning calorimetry (DSC) was performed on the heat generating material (1) prepared above under the conditions of hydrogen gas (H₂) flow or helium gas (He) flow in accordance with the following measurement conditions:
·DSC conditions
   Sample amount: 40 mg
   Temperature range: room temperature to 800°C
   Temperature rising rate: 5°C/min
   Gas flow rate: H₂ 120 mL/min, He 120 mL/min
   Holding temperature: 250 to 800°C
   Holding time: 2 hours
·DSC procedure

Before the day before the measurement, the baseline measurement was performed on an empty sample by the same procedure as described below.

As a preprocess, vacuum deaeration was performed until the pressure became 10⁻³ Pa or less (required time was 2 to 3) .

The temperature was raised from room temperature to a predetermined temperature in He or H₂ stream, and the measurement was conducted at that temperature.

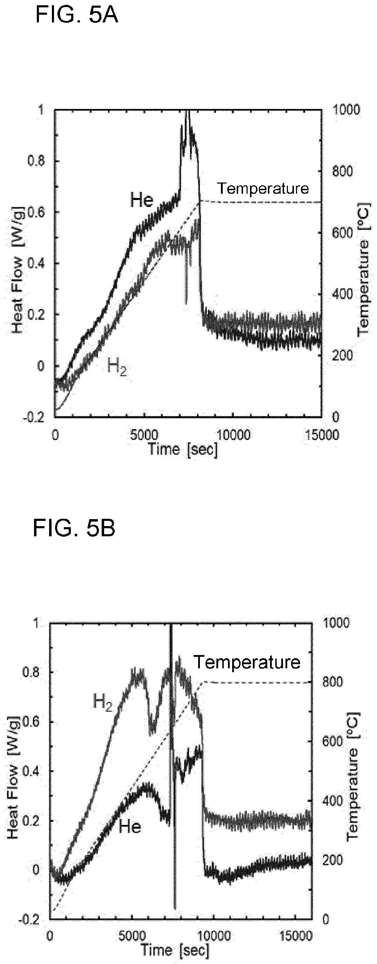

The results of this DSC are shown in Figs. 5A and 5B, respectively. Here, Figs. 5A and 5B are graphs showing the results of the measurement performed by setting the holding temperature in DSC to 700°C (Fig. 5A) or 800°C (Fig. 5B) which is more than the melting point of aluminum (Al) and less than the melting point of nickel (Ni). It is considered that the heat generating material (1) subjected to such DSC have had the configurations as illustrated in Figs. 1 and 2 in the process of heating.

As illustrated in Figs. 5A and 5B, when the temperature of the heat generating material (1) was raised to 700°C or 800°C, a very large heat generation phenomenon (excess heat generation) in the case of H₂ flow as compared to the case of He flow was continuously confirmed. That is, the heat generating material (1) was confirmed to be a material continuously showing a very large heat generation phenomenon (excess heat generation) when these metals come into contact with hydrogen gas (H₂) at a temperature less than the melting point of nickel (Ni) as the second metal. The excess heat (Δ) generated during the holding time in this measurement was Δ = 66.5 [mW/g heat generating material] when the holding temperature was 700°C (Fig. 5A), and the excess heat (Δ) was Δ = 176 [mW/g heat generating material] when the holding temperature was 800°C (Fig. 5B). These results are also shown in Table 1 below.

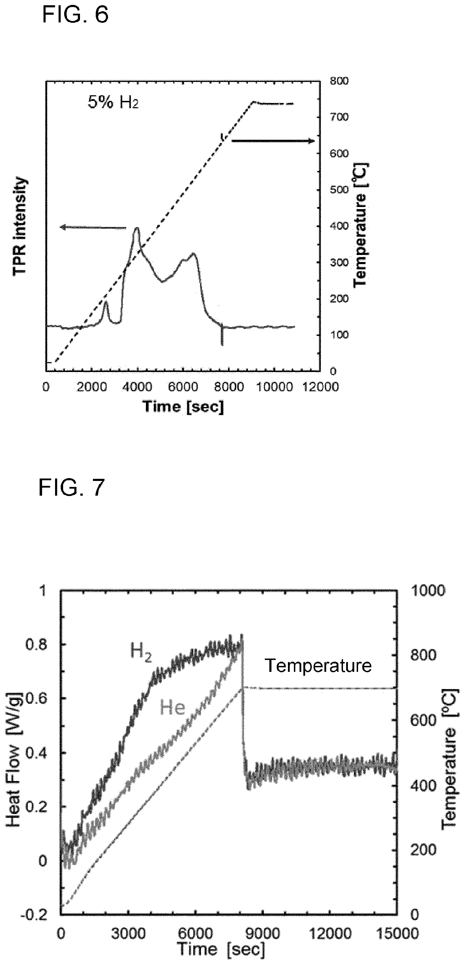

Note that, regarding the heat generating material (1) prepared above, the profile of hydrogen absorption reaction of the heat generating material (1) at the time of temperature rise was investigated by hydrogen TPR (temperature-programmed reduction) method. The results are shown in Fig. 6.

As illustrated in Fig.6, the heat generating material (1) caused a hydrogen absorption reaction in the range of 300 to 600°C, but no progress of the hydrogen absorption reaction was confirmed in the range of more than 700°C. From this, it was suggested that the large heat generation observed when the heat generating material (1) was heated was different from the hydrogen absorption heat in the hydrogen absorption reaction.

### [Example 3]

A heat generating material (2) was prepared by the following method, and differential scanning calorimetry (DSC) was performed.

### (Preparation of Heat Generating Material (2))

The heat generating material (2) was prepared in the same manner as in Example 1 described above, except that zirconium (Zr) powder was used instead of aluminum (Al) powder. Here, since the melting point of zirconium (Zr) is 1855°C, in the heat generating material (2), nickel (Ni) is the first metal and zirconium (Zr) is the second metal.

### (Differential Scanning Calorimetry (DSC) of Heat Generating Material (2))

Differential scanning calorimetry (DSC) was conducted on the heat generating material (2) prepared above under the same measurement conditions as in Example 1 described above, except that the holding temperature was changed from 700°C to 450°C.

When the temperature of the heat generating material (2) was raised to 450°C (less than the melting point of (Zr)), a very large heat generation phenomenon (excess heat generation) in the case of H₂ flow as compared to the case of He flow was continuously confirmed. That is, the heat generating material (2) was also confirmed to be a material continuously showing a very large heat generation phenomenon (excess heat generation) when these metals come into contact with hydrogen gas (H₂) at a temperature less than the melting point of zirconium (Zr) as the second metal. The excess heat (Δ) generated during the holding time in this measurement was Δ = 13 [mW/g heat generating material].

### [Example 4]

A heat generating material (3) was prepared by the following method, and differential scanning calorimetry (DSC) was conducted.

### (Preparation of Heat Generating Material (3))

The heat generating material (3) was prepared in the same manner as in Example 1 described above, except that titanium (Ti) powder was used instead of nickel (Ni) powder. Here, since the melting point of titanium (Ti) is 1668°C, in the heat generating material (3), aluminum (Al) is the first metal and titanium (Ti) is the second metal.

### (Differential Scanning Calorimetry (DSC) of Heat Generating Material (3))

Differential scanning calorimetry (DSC) was conducted on the heat generating material (3) prepared above under the same measurement conditions as in Example 1 described above.

When the temperature of the heat generating material (3) was raised to 700°C (less than the melting point of titanium (Ti)), a very large heat generation phenomenon (excess heat generation) in the case of H₂ flow as compared to the case of He flow was continuously confirmed. That is, the heat generating material (3) was also confirmed to be a material continuously showing a very large heat generation phenomenon (excess heat generation) when these metals come into contact with hydrogen gas (H₂) at a temperature less than the melting point of titanium (Ti) as the second metal. The excess heat (Δ) generated during the holding time in this measurement was Δ = 36 [mW/g heat generating material].

### [Example 5]

A heat generating material (4) was prepared by the following method, and differential scanning calorimetry (DSC) was conducted.

### (Preparation of Heat Generating Material (4))

The heat generating material (4) was prepared in the same manner as in Example 4 described above, except that tin (Sn) powder was used instead of aluminum (Al) powder. Here, since the melting point of titanium (Ti) is 1668°C, in the heat generating material (4), tin (Sn) is the first metal and titanium (Ti) is the second metal.

### (Differential Scanning Calorimetry (DSC) of Heat Generating Material (4))

Differential scanning calorimetry (DSC) was conducted on the heat generating material (4) prepared above under the same measurement conditions as in Example 1 described above.

When the temperature of the heat generating material (4) was raised to 700°C (less than the melting point of titanium (Ti)), a very large heat generation phenomenon (excess heat generation) in the case of H₂ flow as compared to the case of He flow was continuously confirmed. That is, the heat generating material (4) was also confirmed to be a material continuously showing a very large heat generation phenomenon (excess heat generation) when these metals come into contact with hydrogen gas (H₂) at a temperature less than the melting point of titanium (Ti) as the second metal. The excess heat (Δ) generated during the holding time in this measurement was Δ = 50 [mW/g heat generating material].

### [Example 6]

The heat generating material (5) was prepared by the following method, and differential scanning calorimetry (DSC) was conducted.

### (Preparation of Heat Generating Material (5))

The heat generating material (5) was prepared in the same manner as in Example 4 described above, except that manganese (Mn) powder was used instead of titanium (Ti) powder. Here, since the melting point of manganese (Mn) is 1246°C, in the heat generating material (5), aluminum (Al) is the first metal and manganese (Mn) is the second metal.

### (Differential Scanning Calorimetry (DSC) of Heat Generating Material (5))

Differential scanning calorimetry (DSC) was conducted on the heat generating material (5) prepared above under the same measurement conditions as in Example 1 described above.

When the temperature of the heat generating material (5) was raised to 700°C (less than the melting point of manganese (Mn)), a very large heat generation phenomenon (excess heat generation) in the case of H₂ flow as compared to the case of He flow was continuously confirmed. That is, the heat generating material (5) was also confirmed to be a material continuously showing a very large heat generation phenomenon (excess heat generation) when these metals come into contact with hydrogen gas (H₂) at a temperature less than the melting point of manganese (Mn) as the second metal. The excess heat (Δ) generated during the holding time in this measurement was Δ = 60 [mW/g heat generating material].

### [Example 7]

A heat generating material (6) was prepared by the following method, and differential scanning calorimetry (DSC) was conducted.

### (Preparation of Heat Generating Material (6))

The heat generating material (6) was prepared in the same manner as in Example 6 except that calcium (Ca) powder was used instead of manganese (Mn) powder.

Here, since the melting point of calcium (Ca) is 842°C, in the heat generating material (6), aluminum (Al) is the first metal and calcium (Ca) is the second metal.

### (Differential Scanning Calorimetry (DSC) of Heat Generating Material (6))

Differential scanning calorimetry (DSC) was conducted on the heat generating material (6) prepared above under the same measurement conditions as in Example 1 described above, except that the holding temperature was changed from 700°C to 600°C.

When the temperature of the heat generating material (6) was raised to 600°C (less than the melting point of calcium (Ca)), a very large heat generation phenomenon (excess heat generation) in the case of H₂ flow as compared to the case of He flow was continuously confirmed. That is, the heat generating material (6) was also confirmed to be a material continuously showing a very large heat generation phenomenon (excess heat generation) when these metals come into contact with hydrogen gas (H₂) at a temperature less than the melting point of calcium (Ca) as the second metal. The excess heat (Δ) generated during the holding time in this measurement was Δ = 105 [mW/g heat generating material].

### [Example 8]

The heat generating material (7) was prepared by the following method, and differential scanning calorimetry (DSC) was conducted.

### (Preparation of Heat Generating Material (7))

First, aluminum (Al) (melting point: 660.3°C) powder (purity 99.5%) was prepared as the first metal. 25 mL of distilled water as a solvent was added to 0.50 g of this aluminum (Al) powder. Next, 84 µL of triethylamine was added as a catalyst for the silicidation (hydrolysis/condensation) reaction described below, and the mixture was stirred for 10 minutes to homogenize the liquid phase content.

After that, 83 µL of APTES (3-aminopropyl-triethoxysilane) was added, the solution was heated to 60°C, and further stirred for 30 minutes. As a result, APTES was adsorbed on the surface of the particles of a simple substance of aluminum (Al).

Then, 5 mL of tetraethoxysilane (TEOS) was added. At this point, since TEOS was not dissolved in water, the solution was in a state of being separated into two layers (the lower layer was an aqueous liquid phase and the upper layer was a TEOS phase).

After the addition of TEOS, the solution was stirred for 2 hours while being heated to 60°C. As a result, TEOS and APTES slightly dissolved in the aqueous liquid phase caused a silicidation (hydrolysis/condensation) reaction in the presence of the above catalyst. As this reaction proceeded, TEOS present in the aqueous liquid phase was consumed, so TEOS was continuously supplied from the TEOS phase to the aqueous liquid phase, and the silicidation (hydrolysis/condensation) reaction proceeded until the whole TEOS was consumed.

After the completion of the silicidation reaction, a centrifugation process (at 2000 rpm for 15 minutes) was performed for the purpose of separating the silica-coated aluminum (Al) particles from the solution. Then, for the purpose of removing the triethylamine and unreacted silica raw material attached to the separated silica-coated Al particles, the particles were washed three times with 2-propanol. After that, vacuum drying was performed for 12 hours. Then, 2-propanol remaining on the silica-coated Al particles was removed by firing the particles in air at 350°C for 1 hour, and the silicidation reaction was allowed to completely proceed. In this manner, composite particles were obtained in which the surface of the Al particles was covered with silica, i.e., an inorganic porous body (metallic oxide).

Subsequently, 2.095 mL of 1 mol/L aqueous solution of nickel nitrate (Ni(NO₃)₂), i.e., a compound containing nickel as the second metal having a hydrogen absorption capacity, and 1 mL of distilled water were added to 0.2812 g of the composite particles (silica-coated Al particles) obtained above. Then, this solution was subjected to an impregnation process overnight while being heated to 70 to 100°C in order to allow nickel ions (Ni²⁺) to penetrate into the pores of silica. After that, vacuum drying was performed for 12 hours, and then firing was performed at 350°C for 1 hour in a hydrogen stream. Thus, nickel ions (Ni²⁺) were reduced to a simple substance of nickel (Ni) (melting point: 1455°C) to prepare the heat generating material (7).

The heat generating material (7) prepared in this manner is considered to have a configuration as illustrated in Fig. 3.

### (Differential Scanning Calorimetry (DSC) of Heat Generating Material (7))

Differential scanning calorimetry (DSC) was performed on the heat generating material (7) prepared above under the conditions of hydrogen gas (H₂) flow or helium gas (He) flow in accordance with the following measurement conditions:
·DSC conditions
   Sample amount: 40 mg
   Temperature range: room temperature to 800°C
   Temperature rising rate: 5°C/min
   Gas flow rate: H₂ 120 mL/min, He 120 mL/min
   Holding temperature: 250 to 800°C
   Holding time: 2 hours
·DSC procedure

Before the day before the measurement, the baseline measurement was performed on an empty sample by the same procedure as described below.

As a preprocess, vacuum deaeration was performed until the pressure became 10⁻³ Pa or less (required time was 2 to 3) .

The temperature was raised from room temperature to a predetermined temperature in He or H₂ stream, and the measurement was conducted at that temperature.

When the temperature of the heat generating material (7) was raised to 700°C (less than the melting point of nickel (Ni)), the heat generation phenomenon in the case of H₂ flow, which was much larger than that in the case of He flow (excess heat generation), was continuously confirmed. That is, the heat generating material (7) was also confirmed to be a material continuously showing a very large heat generation phenomenon (excess heat generation) when these metals come into contact with hydrogen gas (H₂) at a temperature less than the melting point of nickel (Ni) as the second metal. The excess heat (Δ) generated during the holding time in this measurement was Δ = 170 [mW/g heat generating material].

### [Comparative Example 1]

Differential scanning calorimetry (DSC) was conducted on nickel (Ni) powder, which is known to be a hydrogen absorption metal at high temperatures, under the conditions of hydrogen gas (H₂) flow or helium gas (He) flow in accordance with the same measurement conditions as in Example 1 described above.

The results are shown in Fig.7. As illustrated in Fig.7, regarding the nickel (Ni) powder, even when the temperature was raised to 700°C, a larger heat generation phenomenon than that in the case of He flow was not observed in the case of H₂ flow.

### [Comparative Example 2]

Differential scanning calorimetry (DSC) was conducted on aluminum (Al) powder under the conditions of hydrogen gas (H₂) flow or helium gas (He) flow in accordance with the same measurement conditions as in Example 1 described above.

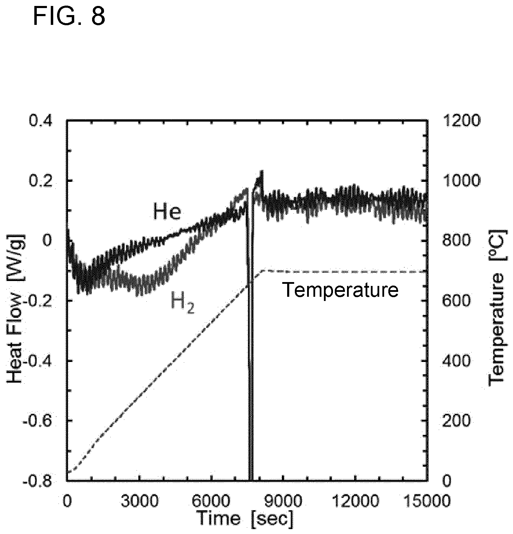

The results are shown in Fig. 8. As illustrated in Fig. 8, regarding the aluminum (Al) powder, even when the temperature was raised to 700°C, a larger heat generation phenomenon than that in the case of He flow was not observed in the case of H₂ flow.

### [Comparative Example 3]

Differential scanning calorimetry (DSC) was conducted on zirconium oxide (ZrO₂) powder under the conditions of hydrogen gas (H₂) flow or helium gas (He) flow in accordance with the same measurement conditions as in Example 1 described above, except that the holding temperature was set to 300°C. As a result, regarding the zirconium oxide (ZrO₂) powder, even when the temperature was raised to 300°C, a larger heat generation phenomenon than that in the case of He flow was not observed in the case of H₂ flow.

### [Comparative Example 4]

Differential scanning calorimetry (DSC) was conducted on silver dioxide (AgO₂) powder under the conditions of hydrogen gas (H₂) flow or helium gas (He) flow in accordance with the same measurement conditions as in Example 1 described above, except that the holding temperature was set to 300°C. As a result, regarding the silver dioxide (AgO₂) powder, even when the temperature was raised to 300°C, a larger heat generation phenomenon than that in the case of He flow was not observed in the case of H₂ flow.

### [Comparative Example 5]

### (Preparation of Heat Generating Material (8))

The heat generating material (8) was prepared in the same manner as in Example 1 described above, except that silver (Ag) was used as the second metal instead of nickel (Ni). Here, since the melting point of aluminum (Al) is 660.3°C and the melting point of silver (Ag) is 961.8°C, in the heat generating material (8), aluminum (Al) is the first metal and silver (Ag) is the second metal.

### (Differential Scanning Calorimetry (DSC) of Heat Generating Material (8))

Differential scanning calorimetry (DSC) was conducted on the heat generating material (8) prepared above under the same measurement conditions as in Example 1 described above. As a result, regarding the heat generating material (8), even when the temperature was raised to 700°C, a larger heat generation phenomenon than that in the case of He flow was not observed in the case of H₂ flow. This can be considered to be due to the fact that the hydrogen solubility of silver (Ag) was too small to absorb a sufficient amount of hydrogen.

### [Comparative Example 6]

### (Preparation of Heat Generating Material (9))

The heat generating material (9) was prepared in the same manner as in Example 1 described above, except that copper (Cu) was used as the second metal instead of nickel (Ni). Here, since the melting point of aluminum (Al) is 660.3°C and the melting point of copper (Cu) is 1085°C, in the heat generating material (9), aluminum (Al) is the first metal and copper (Cu) is the second metal.

### (Differential Scanning Calorimetry (DSC) of Heat Generating Material (9))

Differential scanning calorimetry (DSC) was conducted on the heat generating material (9) prepared above under the same measurement conditions as in Example 1 described above. As a result, regarding the heat generating material (9), even when the temperature was raised to 700°C, a larger heat generation phenomenon than that in the case of He flow was not observed in the case of H₂ flow. This can be considered to be due to the fact that the hydrogen solubility of copper was too small to absorb a sufficient amount of hydrogen.

**[Table 1]**

| | Combination of metals | Holding temperature/°C | Amount of heat generation/mW·g⁻¹ |
|---|---|---|---|
| Example 1 | Ni-Al | 700 | 66.5 |
| Example 2 | Ni-Al | 800 | 176 |
| Example 3 | Ni-Zr | 450 | 13 |
| Example 4 | Ti-Al | 700 | 36 |
| Example 5 | Ti-Sn | 700 | 50 |
| Example 6 | Mn-Al | 700 | 60 |
| Example 7 | Ca-Al | 600 | 105 |
| Example 8 | (Ni-Al) /SiO₂ | 700 | 170 |
| Comparative Example 1 | Ni | 700 | 0 |
| Comparative Example 2 | Al | 700 | 0 |
| Comparative Example 3 | ZrO₂ | 300 | 0 |
| Comparative Example 4 | AgO₂ | 300 | 0 |
| Comparative Example 5 | Ag-Al | 700 | 0 |
| Comparative Example 6 | Cu-Al | 700 | 0 |

When the above results were summarized, it was found that, according to the use of the present invention, the heat generating material was heated, in the presence of hydrogen gas (H₂), to a temperature less than the melting point of the second metal forming the heat generating material, whereby it was possible to continuously cause a very large heat generation phenomenon (excess heat generation). It was also confirmed that the mechanism could not be explained by the mere hydrogen absorption heat in the hydrogen absorption reaction. Consequently, it can be said that the heat generating material according to the present invention has a very great potential for applications to heat generating systems, and the like.

### Reference Signs List

- 10: Heat generating material,
- 20: Aluminum (Al),
- 30: Nickel (Ni)
- 40: Alloy of aluminum (Al) and nickel (Ni),
- 50: Outer shell made of silica.
of the second metal.

## Claims

1. Use of a material as a heat generating material, the material comprising:
a first metal having a melting point of 230°C or more; and
a second metal having a melting point higher than the melting point of the first metal,
wherein at least one of the first metal or the second metal has a hydrogen solubility greater than silver at a temperature less than the melting point of the second metal,
a hydride of at least one of the first metal or the second metal has a standard enthalpy of formation equal to or more than a standard enthalpy of formation of CaH₂, and
heat is generated when the first metal and the second metal come into contact with hydrogen gas at a temperature less than the melting point of the second metal.

2. The use of a material as a heat generating material according to claim 1, wherein the first metal and the second metal are present as an alloy having a plurality of phases with different composition ratios.

3. The use of a material as a heat generating material according to claim 1 or 2, wherein the first metal is aluminum, tin, or lead.

4. The use of a material as a heat generating material according to any one of claims 1 to 3, wherein the second metal is nickel, titanium, zirconium, manganese, zinc, vanadium, or calcium.

5. The use of a material as a heat generating material according to any one of claims 1 to 4, wherein a combination of the first metal and the second metal is aluminum-nickel, aluminum-titanium, aluminum-manganese, aluminum-zinc, tin-titanium, or aluminum-calcium.

6. The use of a material as a heat generating material according to any one of claims 1, 2 or 4, wherein a combination of the first metal and the second metal is nickel-zirconium.

7. The use of a material as a heat generating material according to any one of claims 1 to 6, wherein the first metal and the second metal are located inside an outer shell made of an inorganic porous body.

8. The use of a material as a heat generating material according to claim 7, wherein the inorganic porous body contains a metallic oxide.

9. The use of a material as a heat generating material according to claim 8, wherein the metallic oxide contains silica or zirconia.

10. A heat generating system comprising:
a heat generating device in which a heat generating material is arranged;
a heater configured to heat the heat generating material to a temperature that is equal to or more than a melting point of the first metal and is less than a melting point of the second metal; and
a hydrogen gas supplying device that supplies hydrogen gas to the heat generating material;
wherein the heat generating material comprises:
a first metal having a melting point of 230°C or more, and
a second metal having a melting point higher than the melting point of the first metal,
wherein at least one of the first metal or the second metal has a hydrogen solubility greater than silver at a temperature less than the melting point of the second metal,
wherein a hydride of at least one of the first metal or the second metal has a standard enthalpy of formation equal to or more than a standard enthalpy of formation of CaH₂, and
wherein heat is generated when the first metal and the second metal come into contact with hydrogen gas at a temperature less than the melting point of the second metal.

11. A method of supplying heat comprising: heating the heat generating material according to any one of claims 1 to 9 in the presence of hydrogen gas to a temperature that is equal to or more than a melting point of the first metal and is less than a melting point of the second metal; and causing the heat generating material to generate heat.

## Patentansprüche

1. Verwendung eines Materials als Wärmeerzeugungsmaterial, wobei das Material umfasst:
ein erstes Metall mit einem Schmelzpunkt von 230°C oder mehr; und
ein zweites Metall mit einem Schmelzpunkt, der höher als der Schmelzpunkt des ersten Metalls ist, wobei
mindestens eines des ersten Metalls oder des zweiten Metalls bei einer Temperatur, die unter dem Schmelzpunkt des zweiten Metalls liegt, eine Wasserstofflöslichkeit von mehr als Silber aufweist,
ein Hydrid von mindestens einem des ersten Metalls oder des zweiten Metalls eine Standardbildungsenthalpie hat, die gleich oder größer ist als eine Standardbildungsenthalpie von CaH2, und
Wärme erzeugt wird, wenn das erste Metall und das zweite Metall mit Wasserstoffgas bei einer Temperatur unterhalb des Schmelzpunkts des zweiten Metalls in Kontakt kommen.

2. Verwendung eines Materials als Wärmeerzeugungsmaterial gemäß Anspruch 1, wobei das erste Metall und das zweite Metall als Legierung mit einer Vielzahl von Phasen mit unterschiedlichen Zusammensetzungsverhältnissen vorhanden sind.

3. Verwendung eines Materials als Wärmeerzeugungsmaterial gemäß Anspruch 1 oder 2, wobei das erste Metall Aluminium, Zinn oder Blei ist.

4. Verwendung eines Materials als Wärmeerzeugungsmaterial gemäß einem der Ansprüche 1 bis 3, wobei das zweite Metall Nickel, Titan, Zirkonium, Mangan, Zink, Vanadium oder Calcium ist.

5. Verwendung eines Materials als Wärmeerzeugungsmaterial gemäß einem der Ansprüche 1 bis 4, wobei eine Kombination aus dem ersten Metall und dem zweiten Metall Aluminium-Nickel, Aluminium-Titan, Aluminium-Mangan, Aluminium-Zink, Zinn-Titan oder Aluminium-Calcium ist.

6. Verwendung eines Materials als Wärmeerzeugungsmaterial gemäß einem der Ansprüche 1, 2 oder 4, wobei eine Kombination aus dem ersten Metall und dem zweiten Metall Nickel-Zirkonium ist.

7. Verwendung eines Materials als Wärmeerzeugungsmaterial gemäß einem der Ansprüche 1 bis 6, wobei das erste Metall und das zweite Metall innerhalb einer äußeren Hülle aus einem anorganischen porösen Körper angeordnet sind.

8. Verwendung eines Materials als Wärmeerzeugungsmaterial gemäß Anspruch 7, wobei der anorganische poröse Körper ein Metalloxid enthält.

9. Verwendung eines Materials als Wärmeerzeugungsmaterial gemäß Anspruch 8, wobei das Metalloxid Siliziumdioxid oder Zirkoniumdioxid enthält.

10. Ein Wärmeerzeugungssystem, umfassend:
eine wärmeerzeugende Vorrichtung, in der ein Wärmeerzeugungsmaterial angeordnet ist;
eine Heizvorrichtung, die konfiguriert ist, das Wärmeerzeugungsmaterial auf eine Temperatur zu erhitzen, die gleich oder höher ist als der Schmelzpunkt des ersten Metalls und niedriger ist als der Schmelzpunkt des zweiten Metalls; und
eine Wasserstoffgaszufuhrvorrichtung, die dem Wärmeerzeugungsmaterial Wasserstoffgas zuführt; wobei
das Wärmeerzeugungsmaterial umfasst:
ein erstes Metall mit einem Schmelzpunkt von 230°C oder mehr, und
ein zweites Metall mit einem Schmelzpunkt, der höher als der Schmelzpunkt des ersten Metalls ist, wobei
mindestens eines des ersten Metalls oder des zweiten Metalls eine Wasserstofflöslichkeit aufweist, die größer ist als die von Silber bei einer Temperatur, die niedriger ist als der Schmelzpunkt des zweiten Metalls, wobei
ein Hydrid von mindestens einem des ersten Metalls oder des zweiten Metalls eine Standardbildungsenthalpie hat, die gleich oder größer als eine Standardbildungsenthalpie von CaH2 ist, und wobei
Wärme erzeugt wird, wenn das erste Metall und das zweite Metall mit Wasserstoffgas bei einer Temperatur unterhalb des Schmelzpunkts des zweiten Metalls in Kontakt kommen.

11. Wärmezufuhrverfahren, umfassend: Erhitzen des Wärmeerzeugungsmaterials gemäß einem der Ansprüche 1 bis 9 in Gegenwart von Wasserstoffgas auf eine Temperatur, die gleich oder höher ist als der Schmelzpunkt des ersten Metalls und niedriger ist als der Schmelzpunkt des zweiten Metalls; und Veranlassen des Wärmeerzeugungsmaterials, Wärme zu erzeugen.

## Revendications

1. Utilisation d'un matériau comme matériau de génération de chaleur, le matériau comprenant :
un premier métal ayant un point de fusion de 230°C ou plus ; et
un second métal ayant un point de fusion supérieur au point de fusion du premier métal,
dans laquelle au moins l'un du premier métal ou du second métal a une solubilité dans l'hydrogène supérieure à celle de l'argent à une température inférieure au point de fusion du second métal,
un hydrure d'au moins l'un du premier métal ou du second métal a une enthalpie standard de formation supérieure ou égale à une enthalpie standard de formation de CaH₂, et
de la chaleur est générée lorsque le premier métal et le second métal entrent en contact avec de l'hydrogène gazeux à une température inférieure au point de fusion du second métal.

2. Utilisation d'un matériau comme matériau de génération de chaleur selon la revendication 1, dans laquelle le premier métal et le second métal sont présents sous forme d'un alliage ayant une pluralité de phases avec des rapports de composition différents.

3. Utilisation d'un matériau comme matériau de génération de chaleur selon la revendication 1 ou 2, dans laquelle le premier métal est l'aluminium, l'étain ou le plomb.

4. Utilisation d'un matériau comme matériau de génération de chaleur selon l'une quelconque des revendications 1 à 3, dans laquelle le second métal est le nickel, le titane, le zirconium, le manganèse, le zinc, le vanadium ou le calcium.

5. Utilisation d'un matériau comme matériau de génération de chaleur selon l'une quelconque des revendications 1 à 4, dans laquelle une combinaison du premier métal et du second métal est de l'aluminium-nickel, de l'aluminium-titane, de l'aluminium-manganèse, de l'aluminium-zinc, de l'étain-titane ou de l'aluminium-calcium.

6. Utilisation d'un matériau comme matériau de génération de chaleur selon l'une quelconque des revendications 1, 2 ou 4, dans laquelle une combinaison du premier métal et du second métal est du nickel-zirconium.

7. Utilisation d'un matériau comme matériau de génération de chaleur selon l'une quelconque des revendications 1 à 6, dans laquelle le premier métal et le second métal sont situés à l'intérieur d'une coque externe constituée d'un corps poreux inorganique.

8. Utilisation d'un matériau comme matériau de génération de chaleur selon la revendication 7, dans laquelle le corps poreux inorganique contient un oxyde métallique.

9. Utilisation d'un matériau comme matériau de génération de chaleur selon la revendication 8, dans laquelle l'oxyde métallique contient de la silice ou de la zircone.

10. Système de génération de chaleur comprenant :
un dispositif de génération de chaleur dans lequel un matériau de génération de chaleur est agencé ;
un appareil de chauffage configuré pour chauffer le matériau de génération de chaleur jusqu'à une température qui est supérieure ou égale à un point de fusion du premier métal et inférieure au point de fusion du second métal ; et
un dispositif d'alimentation en hydrogène gazeux qui fournit de l'hydrogène gazeux au matériau de génération de chaleur ;
dans lequel le matériau de génération de chaleur comprend :
un premier métal ayant un point de fusion de 230°C ou plus, et
un second métal ayant un point de fusion supérieur au point de fusion du premier métal,
où au moins l'un du premier métal ou du second métal a une solubilité dans l'hydrogène supérieure à celle de l'argent à une température inférieure au point de fusion du second métal,
où un hydrure d'au moins l'un du premier métal ou du second métal a une enthalpie standard de formation supérieure ou égale à une enthalpie standard de formation de CaH₂, et
où de la chaleur est générée lorsque le premier métal et le second métal entrent en contact avec de l'hydrogène gazeux à une température inférieure au point de fusion du second métal.

11. Procédé de fourniture de chaleur comprenant : chauffer le matériau de génération de chaleur selon l'une quelconque des revendications 1 à 9 en présence d'hydrogène gazeux jusqu'à une température qui est supérieure ou égale à un point de fusion du premier métal et est inférieure à un point de fusion du second métal ; et amener le matériau de génération de chaleur à générer de la chaleur.
